# EUROPÄISCHE PATENTSCHRIFT

(11) **EP 0 887 952 B1**
(45) Veröffentlichungstag und Bekanntmachung des Hinweises auf die Patenterteilung: **29.05.2002**
(21) Anmeldenummer: 98115808.2
(22) Anmeldetag: 21.08.1998
(51) Int. Cl.: H04B 10/148

(54) **Verfahren und Vorrichtung zum Empfang eines phasenmodulierten Lichtsignals und zur Erfassung von Ausrichtungsfehlern**
Method and apparatus for the reception of a phase modulated optical signal and for the detection of misalignment errors
Méthode et dispositif de réception d'un signal optique modulé en phase et de détection d'erreur d'alignement

(30) Priorität: 27.02.1998 CH 47298
(43) Veröffentlichungstag der Anmeldung: 30.12.1998
(73) Patentinhaber: Contraves Space AG, 8052 Zürich (CH)
(72) Erfinder: Wandernoth, Bernhard, Dr. Ing., 9533 Kirchberg (CH); Guggenbuehl, Walter, Prof. Dr. Ing., 8712 Stäfa (CH); Deflorin, Urs, Dipl.-Ing. (HTL), 8805 Richterswil (CH)
(74) Vertreter: Heusch, Christian

(56) Entgegenhaltungen:
- EP-A- 0 280 075
- EP-A- 0 319 788

## Beschreibung

Die vorliegende Erfindung betrifft ein Verfahren und verschiedene zu dessen Durchführung verwendbare Vorrichtungen zur Detektion eines Lichtsignals.

Die optische Freiraum-Kommunikation zwischen Satelliten sowie zwischen Satellit und Bodenstation wird in naher Zukunft eine wichtige und an Bord der Satelliten eine gewichtssparende Ergänzung zur bestehenden Mikrowellentechnik darstellen. Sogenannte optische Terminals bestehen aus einem oder mehreren Teleskopen, welche den Winkelbereich des Gesichtsfeldes eines optischen Empfängers in Richtung einer Gegenstation einschränken sowie für eine gerichtete Abstrahlüng der zu sendenden Signale sorgen.

Weiterhin sind mehrere bewegliche Spiegel vorhanden, durch welche die Ausrichtung von Sende- und Empfangsrichtung vorgenommen wird. Neben der direkten Detektion der optischen Leistung des Senders der Gegenstation als Übertragungsverfahren spielt auch die kohärente Überlagerung des empfangenen Lichts mit dem gleichfrequenten Licht eines Lokaloszillator-Lasers eine bedeutende Rolle, da dabei neben einer grossen Empfindlichkeit für das zu detektierende Signal die Unempfindlichkeit für Störungen durch im Hintergrund vorhandene Strahlung vorteilhaft ist.

Die Leistung des zu detektierenden Lichtsignals ist bei oben genannten Systemen im allgemeinen sehr gering, folglich sollte ein möglich grosser Anteil des Lichtsignals in einem Empfänger zur Detektion der übertragenen Daten verwendet werden. So wäre es zum Beispiel denkbar, wegen des schmalbandigen Charakters eines Fehlersignals der Ausrichtung des optischen Teils des Empfängers, einen sehr geringen Anteil des in den Empfänger einlaufenden Lichts auf ein in einer Ebene angeordnetes Feld von gegeneinander abgegrenzten Detektormitteln zu leiten, um ein Richtungsfehlersignal durch die Ermittlung der jeweils beleuchteten Detektormittel zu erhalten. Verwendung findet ein solches Verfahren allerdings nur zur Grobausrichtung während der Verbindungsaufnahme. Da nämlich die zur Datenübertragung verwendeten Lichtquellen mit bedeutend niedrigerer optischer Leistung arbeiten als spezielle optische Bakensender zu Verbindungsaufnahme, ist ein kohärentes Detektionsverfahren erforderlich, was zusätzliche Lichtleistung aus einem zur Überlagerung des empfangenen Lichtsignals vorgesehenen Laseroszillators sowie zusätzliche elektronische Mittel erfordert.

Ein optischer Überlagerungsempfänger für digitale Signale mit einem optoelektrischen 90°-Hybrid und Detektoren, die direkt über zwei Fotoverstärker mit drei Demodulatoren verbunden sind, ist beispielsweise in der Patentschrift EP-0 319 788 B1 beschrieben. Zwei von diesen Demodulatoren weisen je zwei Analogmultiplizierer sowie einen Subtrahierer und einen Addierer auf, deren Ausgangssignale einem weiteren Multiplizierer zugeführt werden. Der Addierer ist eingangsseitig mit den Ausgängen von zwei Multiplizierem verbunden. In diesem für den Empfang von FSK- oder CPDFSK-modulierten Signalen vorgesehenen Empfänger ist dem einen Eingang jedes Multiplizierers ein Verzögerungsglied vorgeschaltet.

Aus der EP 0 280 075 A2 ist ferner ein zur Verbesserung des Signal/Rauschverhältnisses vorgesehener optischer Polarisations-Diversitäts-Empfänger bekannt. Aus der Differenz der Photoströme einer ersten und einer zweiten Diode bzw. der Photoströme einer dritten und einer vierten Diode werden elektrische Signale gewonnen, die in Photostromverstärkem und in Zwischen-Frequenz-Verstärkern verstärkt werden, wobei zusätzlich regelbare Verstärker nachgeschaltet sein können.

Folglich ist es Aufgabe der nachfolgend beschriebenen Erfindung, die Nachteile des Standes der Technik zu überwinden und mit einem kombinierten System die Detektion und Demodulation des Nachrichtensignals bei gleichzeitiger Ableitung eines Richtungsfehlersighals unter bestmöglicher Ausnutzung der zu Verfügung stehenden Leistung des Lichtsignals zu gewährleisten.

Diese Aufgabe wird durch das Verfahren von Anspruch 1 sowie durch die Vorrichtung von Anspruch 5 gelöst. Anspruch 12 definiert eine alternative Ausführungsform dieser Vorrichtung.

Die Vorrichtung nach der vorliegenden Erfindung umfasst Detektormittel und mehrere diesen nachgeordnete elektronische Baugruppen. Obwohl zur Detektion eines beispielsweise phasenmodulierten Lichtsignals lediglich ein Detektormittel erforderlich ist, in welches sowohl das Lichtsignal als auch eine unmodulierte, in seiner Mittenfrequenz gleiche oder der Mittenfrequenz des Lichtsignals relativ nahe Lichtwelle geführt werden, kommen in dem erfindungsgemässen System mehrere zueinander abgegrenzte und seitlich versetzte Detektormittel zum Einsatz. Alle Detektormittel werden gleichermassen von der lokal erzeugten unmodulierten Lichtwelle beleuchtet. Die Beleuchtung durch das Lichtsignal geschieht in Abhängigkeit vom Fehler der Ausrichtung der optischen Empfangseinrichtung nur im Falle dessen Verschwindens gleichmässig, im allgemeinen aber ungleichmässig. In jedem Detektormittel findet durch die quadratische Umsetzung der Gesamtamplitude des Lichtfeldes in elektrischen Strom ein Mischprozess statt, aus dem ein Photostrom mit einer Mittenfrequenz hervorgeht, dessen Wert der Differenz der optischen Mittenfrequenzen des Lichtsignals und des unmodulierten Lichts entspricht. Darüber hinaus entsteht ein Gleichstrom, der sich proportional aus den der mittleren optischen Leistung des Lichtsignals und des unmodulierten Lichts entsprechenden Anteilen addiert. Da die optische Leistung des Lichtsignals diejenige des unmodulierten Lichts um Grössenordnungen unterschreitet, ist es im allgemeinen sehr schwer, aus dem Gleichstrom der Detektormittel ein den Ausrichtungsfehler enthaltendes Signal zu erzeugen. Der durch multiplikative Mischung erzeugte Signalstrom ist proportional von der auf das jeweilige Detektormittel auftreffenden Leistung des Lichtsignals abhängig, wobei der Proportionalitätsfaktor durch die relativ hohe Leistung des unmodulierten Lichts entsprechend hoch ist.

Das erfindungsgemässe Verfahren beinhaltet die Ableitung eines dem Ausrichtungsfehler proportionalen Signals aus den Signalströmen aller Detektormittel. Durch Multiplikation aller Signalströme mit sich selber, d. h. deren Quadrierung, könnte aus den einzelnen Signalströmen ein entsprechender Gleichstrom erzeugt werden. Allerdings besteht in diesem Fall keine Proportionalität zwischen Gleichstrom und optischer Leistung des Lichtsignals im einzelnen Detektormittel und das Vorzeichen der Fehlerspannung ginge verloren. Ausserdem wären die Fehlerspannungen von der Stärke des einfallenden Lichtes, d.h. von der Übertragungsdistanz abhängig. Diese beiden Mängel können nun erfindungsgemäss -wie nachstehend beschrieben- behoben werden.
Es wird die Summe aller Detektorsignale gebildet und deren Verstärkung mittels eines bezüglich Verstärkungsfaktor veränderbaren Verstärkers so geregelt, dass am Ausgang ein von der Stärke des gesamten einfallenden Lichtes unabhängiger Signalpegel entsteht.
Diese Verstärkerregelung (AGC automatic gain control) erfolgt z. B. auf Grund des Vergleichs des Summenausgangssignals mit einem Referenzwert. Durch Anwendung desselben, von der Grösse des Summensignals abhängigen Verstärkungsfaktors auf die beiden Differenzsignale Δx und Δy wird die Charakteristik der Fehlersignale (als Funktion der Ablage des Lichtstrahls von der Sollposition) distanzunabhängig. Wesentlich ist also, dass die Verstärkungsregelcharakteristiken der Differenzkanäle und des Summenkanals an einander angepasst sind, was entsprechende schaltungstechnische Massnahmen erfordert. Die eigentliche Bildung der schmalbandingen Fehlersignale erfolgt nun durch Multiplikation der AGC-geregelten Differenzsignale mit dem Summensignal konstanter Grösse.
Als robustere Variante bietet sich jedoch die sogenannten phasensensitive Gleichrichtung der Differenzsignale mit Hilfe des Summensignals als Referenztakt (sogenannt: balanced modulation) an. Beide Alternativen realisieren grundsätzlich dieselbe Funktion der vorzeichenrichtigen Demodulation des Fehlersignals.

Ein grosser Vorteil ergibt sich dadurch, dass neben der Proportionalität der hierdurch gewonnenen ausrichtungsfehlerabhängigen Grösse des einzelnen Detektormittels auch dessen Erfassung bei nur sehr schwacher Beleuchtung eines einzelnen Detektormittels durch das Lichtsignal gewährleistet ist. Ein weiterer Vorteil besteht darin, dass durch die Ableitung von schmalbandigen Fehlersignalen aus dem eigentlichen Nachrichtensignal auch die bei diesem verwendete hochempfindliche kohärente Detektionstechnik mitbenutzt wird, wobei ausserdem kein Anteil des Lichtsignals dem Transport von Nutzdaten entzogen wird. Weiterhin ist die Vielfachnutzung der zur Signalaufbereitung notwendigen Elektronik hervorzuheben, wodurch, insbesondere bei Einsatz in Satellitensystemen, die Gesamtzuverlässigkeit des Systems erhöht wird.

Weitere Einzelheiten, Merkmale und Vorteile der Erfindung ergeben sich nicht nur aus den Ansprüchen und diesen zu entnehmenden Merkmalen - für sich und/oder in Kombination, sondern auch aus der nachfolgenden Beschreibung eines bevorzugten Ausführungsbeispiels.

Es zeigen:
- **Fig. 1**: ein Blockschema einer zur Durchführung des Verfahrens verwendbaren Vorrichtung,
- **Fig. 2**: ein Blockschaltbild eines Transimpedanzverstärkers,
- **Fig. 3**: eine Differenzstufe,
- **Fig. 4**: eine Gilbert-Zelle,
- **Fig. 5**: eine Struktur einer differentiellen Impedanzlast,
- **Fig. 6**: eine Pegelverschiebe-Vorrichtung,
- **Fig. 7**: ein Blockschema eines Differenzkanals,
- **Fig. 8**: ein Blockschema eines Summenkanals.

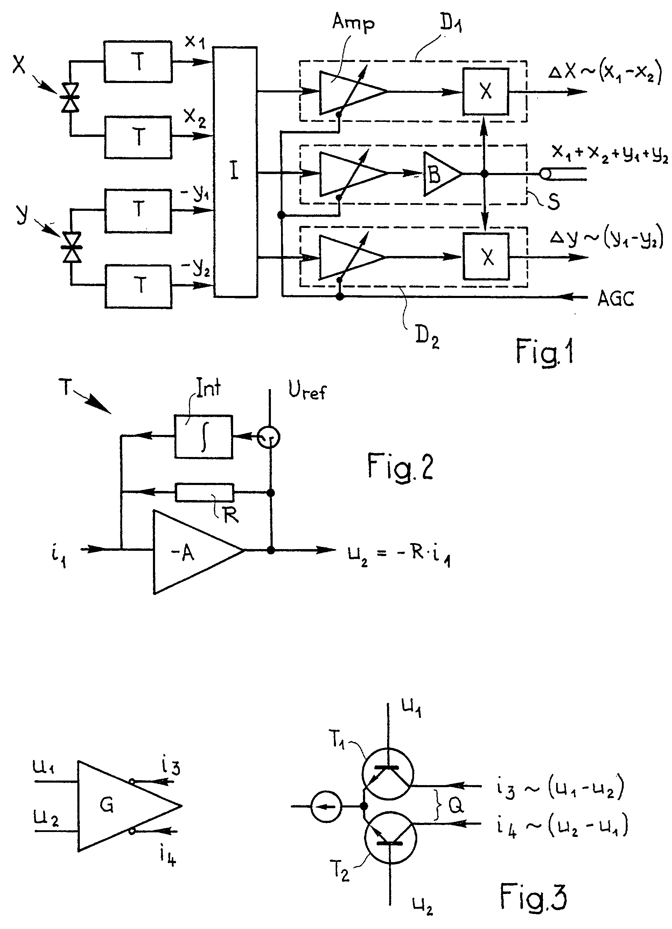

Die Vorrichtung nach **Fig. 1** beinhaltet als Detektormittel vier paarweise zusammengefasste Photodioden in Form von Anordnungen **X** und **Y**. Diese befinden sich jeweils paarweise auf einem entsprechenden Halbleitersubstrat, das beispielsweise mit einer kreisrunden Detektorfläche versehen ist, die sich in zwei halbkreisförmige Zonen aufteilen. Beide Anordnungen **X** und **Y** weisen jeweils zueinander orthogonale Grenzen zwischen den beiden Zonen der Photodioden auf und werden im ausgerichteten Zustand jeweils sowohl von einem Teil des Signallichts als auch von unmoduliertem Laserlicht beleuchtet. Die Aufteilung des Signallichtstrahls geschieht mittels eines Strahlteilers und Umlenkspiegeln. Alle in den Anordnungen **X** und **Y** erzeugten Photoströme gelangen in Transimpedanzverstärker **T**, mittels welcher sie in Ausgangsspannungen **x**_{**1**}, **x**_{**2**}, **y**_{**1**} sowie **y**_{**2**} umgesetzt werden. Bei kohärentem Empfang von Signallicht entsteht durch das überlagerte unmodulierte Laserlicht ein relativ hoher Gleichstrom, welcher unabhängig von der optischen Leistung des auf die Anordnungen **X** und **Y** strahlenden Signallichts ist. In der beschriebenen Vorrichtung wird auf die Abtrennung von Gleichstromkomponenten unter Gebrauch von Kondensatoren aus technologischen Gründen verzichtet und statt dessen eine besondere Ausführung der Transimpedanzverstärker **T** verwendet, welche schematisch in **Fig. 2** dargestellt ist.

Der nach dem Stand der Technik bekannte Transimpedanzverstärker (TIA) besteht aus einem invertierenden Verstärker hoher Leerlaufverstärkung **A** und einem zwischen Ausgang und Eingang geschalteten Gegenkopplungswiderstand **R**, der die Umwandlung des Eingangsstroms **i**_{**1**} in eine Ausgangsspannung u₂ gemäss u₂= i₁R bestimmt. Dieser bekannte **TIA** ist erfindungsgemäss um ein Integrationsglied **Int** parallel zum Gegenkopplungswiderstand **R** erweitert. Der Integrator Int bezieht sein Eingangssignal als Differenz des mittleren Ausgangssignals des **TIA** gegenüber einer Referenzspannung **U**_{**ref**}. Der Ausgangsstrom des Integrators kompensiert die niederfrequenten Stromkomponenten am **TIA** Eingang, und entlastet den **TIA** Verstärker insbesondere vom relativ hohen Gleistrom der als Mischelement eingesetzten Photodiode. Gleichzeitig erzwingen solche Integratoren, die sich auf dieselbe Referenzspannung beziehen, bei allen **TIA**-Verstärkern die gleiche Ausgangs-Gleichspannung, was für die nachfolgende Weiterverarbeitung der hochfrequenten Signalanteile ohne Koppelkondensatoren zwingend ist.

Die Minuszeichen am Ausgang der **y-TIA** Verstärker in **Fig.1** berücksichtigen die Tatsache, dass, bedingt durch die Besonderheiten des optischen Systems, die Ausgangssignale des in y-Richtung angeordneten Diodenpaares gegenüber denjenigen der x-Richtung um 180° in der Phase gedreht sind. Die hochfrequenten Ausgangsspannungen **x**_{**1**}, **x**_{**2**}, **y**_{**1**}, **y**_{**2**} werden über ein Verteilnetzwerk **I** in verschiedenener Kombination an drei Blöcke weitergeleitet. **Fig. 1** zeigt formal die von diesen Blöcken durchgeführten Operationen. Die Signaldifferenzen **x**_{**1**} **- x**_{**2**} bzw. **y**_{**1**} **- y**_{**2**} werden je einem Differenzkanalblock **D1** bzw. **D2** zugeleitet in denen die Operationen Verstärkungsregelung und phasensensitive Gleichrichtung bzw. Multiplikation mit dem phasenrichtigen Summensignal **x**_{**1**} **+ x**_{**2**} **+ y**_{**1**} **+ y**_{**2**} durchgeführt werden. Der sogenannte Summenkanalblock **S** besteht aus einem geregelten Verstärker gefolgt von einer Leitungsanpassungsstufe **B**. Das Summensignal wird nun einerseits als Informationsträger über die dem Ausgang nachgeschalteten Leitungen dem (in **Fig. 1** nicht dargestellten) Signaldemodulator und Verstärkungs-Regelspannungserzeuger, andererseits direkt den fehlerspannungsbildenden Multiplikatoren der Differenzkanäle zugeführt.

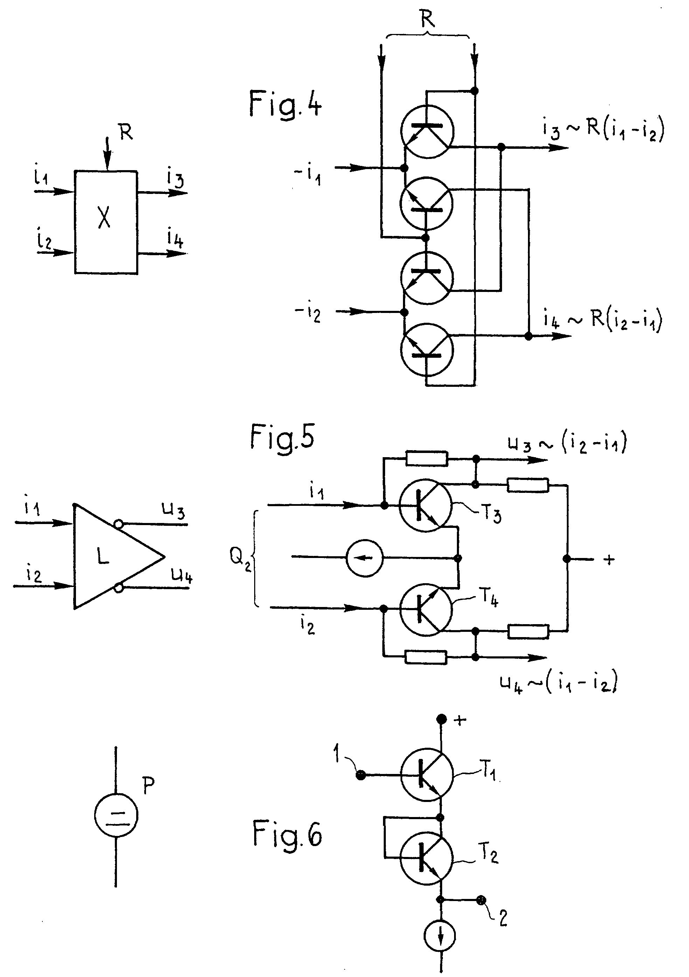

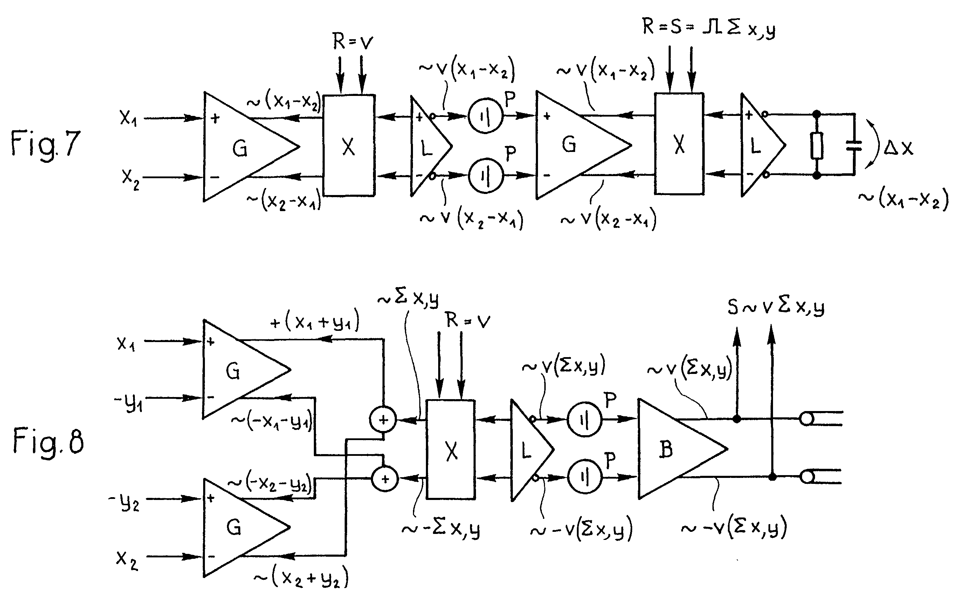

Jeder der beiden Differenzkanal-Blöcke **D1** bzw. **D2** weist in genauerer Darstellung eine in **Fig. 7** gezeigte Struktur auf. Diese umfasst eine Differenzstufe nach **Fig. 3**, gefolgt von einer Gilbert-Zelle als Multiplikator **X** nach **Fig. 4**, einer Transimpedanz-Last **L** nach **Fig. 5,** Pegelverschiebe-Vorrichtungen **P** nach **Fig. 6,** einer weiteren Differenzstufe nach **Fig. 3**, einer weiteren Gilbert-Zelle als Multiplikator **X** nach **Fig. 4** sowie einer weiteren differentiellen Transimpedanz-Last **L** nach **Fig. 5,** welcher ein Tiefpassfilter zur Abtrennung von Wechselstromanteilen nachfolgt. Während die von links betrachtet erste Gilbert-Zelle **X** zur Regelung des Verstärkungsfaktors dient, wobei die Differenzspannung **R** mit der Regelspannung **AGC** in **Fig. 1** identifiziert werden kann, dient die von links betrachtet zweite Gilbert-Zelle **X** zur Multiplikation der Differenzspannung Δ**X** bzw. Δ**Y** mit dem phasenrichtigen Summensignal **x**_{**1**} **+ x**_{**2**} **+ y**_{**1**} **+ y**_{**2**} bzw. der phasensensitiven Gleichrichtung.

Die in **Fig. 3** in Form eines stark vereinfachten Schemas dargestellte Differenzstufe ist eine Vorrichtung, die im wesentlichen eine Stromquelle **Q1** sowie einen Transistor **T1** und einen Transistor **T**_{**2**} umfasst. Beide Transistoren **T**_{**1**} sowie **T**_{**2**} erzeugen jeweils einen Ausgangsstrom **i**_{**3**} bzw. **i**_{**4**}, welcher jeweils proportional zur Differenz der als Eingangsgrössen auftretenden Spannungen **U**_{**1**} bzw. **U**_{**2**} ist, da beide Transistoren **T**_{**1**} und **T**_{**2**} konkurrierend auf den von einer Stromquelle **Q**_{**1**} erzeugten Strom zugreifen. In die beiden Emitterleitungen wird meistens ein Seriewiderstand zur Erhöhung der Eingangsimpedanz geschaltet.

Die in **Fig. 4** in stark vereinfachter Form schematisch dargestellte Vorrichtung ist aus zwei Vorrichtungen nach **Fig. 3** zusammengesetzt, als Ersatz für die Stromquelle **Q**_{**1**} dienen zwei Eingangsströme **i**_{**1**} und **i**_{**2**}, eine zwischen den Basisanschlüssen der Transistoren **T**_{**1**} und **T**_{**2**} bestehende Differenzspannung **R** ersetzt die in der Vorrichtung nach **Fig. 3** wirksame Differenz zwischen den Spannungen **U**_{**1**} und **U**_{**2**}. Resultierende Ausgangsströme **i**_{**3**} und **i**_{**4**}, sind proportional zum Produkt aus der Differenzspannung **R** und der Differenz der Eingangsströme **i**_{**1**} sowie **i**_{**2**} und unterscheiden sich durch ihr Vorzeichen. Diese Anordnung wird in der Fachliteratur als Gilbert-Zelle bezeichnet.

Die in **Fig. 5** in stark vereinfachter Form schematisch dargestellte Vorrichtung beinhaltet eine Stromquelle **Q**_{**2**}, auf deren Strom zwei Transistoren **T**_{**3**} und **T**_{**4**} konkurrierend zugreifen. Die Transistoren **T**_{**3**} und **T**_{**4**} verstärken als Eingangsgrössen auftretende Ströme **i**_{**1**} und **i**_{**2**}, wodurch sich der von der Stromquelle **Q**_{**2**} erzeugte Strom in zwei Anteile aufteilt, deren Amplitude mit jeweils zueinander entgegengesetztem Vorzeichen proportional zur Differenz zwischen derjenigen der Ströme **i**_{**1**} und **i**_{**2**} ist. Als Ausgangsgrössen werden dieser Vorrichtung diesen Strömen proportionale Spannungen **U**_{**3**} und **U**_{**4**} entnommen, welche bei grosser Verstärkung der Transistoren durch die Gleichung **U**_{**3**}**-U**_{**4**} **≈ -R**_{**A**} **(i**_{**1**}**-i**_{**2**}**)** berechnet wird.

Eine in **Fig. 6** dargestellte Pegelverschiebe-Vorrichtung **P** dient primär zur Anpassung der Gleichstrompegel aufeinanderfolgender Verstärkerstufen und zur Reduktion der Ausgangsimpedanzen der dem Punkt 1 vorangehenden Schaltungen. Der im Transistor **T**_{**1**} verstärkte Strom fliesst in den Schaltungsausgang 2. Bei genügend hochohmiger Last am Punkt 2 folgt dieser signalspannungsmässig dem Punkt 1 (Emitterfolger-Konzept) mit einem ungefähr konstanten Gleichspannungsversatz. Der in Serie zum Emitter von **T**_{**1**} vorgesehene, als Diode geschaltete Transistor **T**_{**2**} erhöht diesen Spannungsversatz gegenüber dem einfachen Emitterfolger.

Eine weitere Ausführungsform eines Summenkanals **S** nach **Fig. 1** in Kombination mit entsprechenden Elementen des Netzwerks **I** nach **Fig. 1** ist in **Fig. 8** dargestellt.

Die in den Anordnungen **X** und **Y** erzeugten Signale **x**_{**1**} und **x**_{**2**} bzw. **y**_{**1**} und **y**_{**2**} sind aufgrund von Besonderheiten der vorgelagerten optischen Komponenten zueinander gegenphasig. Die Summation der Signale wird dann mit Verwendung von Differenzverstärkern wie folgt gebildet: Mittels Zuführung einer geeigneten Kombination von **TIA**-Ausgangssignalpaaren an die Eingänge zweier Differenzstufen vom Typ, wie er in **Fig. 3** dargestellt ist und der geeigneten Ausgangsleitungen können die Eingänge der nachgeschalteten Gilbert-Zelle mit zwei gegenphasigen Summensignalen beschickt werden, die dann am Ausgang der Gilbert-Zelle mit dem AGC-Signal multipliziert als differentielle Ströme zur Verfügung stehen, und in der differentiellen Lastschaltung in entsprechende Spannungen umgewandelt werden.
Auf diesem Verstärkerblock folgt im Summenkanal nach einer Pegelverschiebungsschaltung ein sogenannter Pufferverstärker mit Spannungsverstärker ca. = 1 zur Impedahzanpassung an zwei 50 Ω Leitungen.

## Patentansprüche

1. Verfahren zur Detektion eines Lichtsignals mit Hilfe von mehreren gegeneinander räumlich abgegrenzten Detektormitteln (**X, Y**), einem Netzwerk (**I**) und zwei Differenzblöcken (**D**_{**1**}**, D**_{**2**}), **dadurch gekennzeichnet, dass**
in den Detektormitteln (**X, Y**) erzeugte Photoströme in einen Transimpedanzverstärker (**T**) gelangen, in welchem sie in Ausgangsspannungen **x**_{**1**}**, x**_{**2**}**, y**_{**1**}**, y**_{**2**} umgesetzt werden, die über ein Verteilnetzwerk (**I**) an drei Blöcke weitergeleitet werden, um ein Summensignal **x**_{**1**} **+ x**_{**2**} **+ y**_{**1**} **+ y**_{**2**} in einem Summenkanalblock (**S**) und ein Differenzsignal **x**_{**1**} **- x**_{**2**}, bzw. **y**_{**1**} **- y**_{**2**} in je einem Differenzkanalblock (**D1** bzw. **D2**) zu bilden, und dass eine Multiplikation der Differenzsignale mit dem Summensignal **x**_{**1**} **+ x**_{**2**} **+ y**_{**1**} **+ y**_{**2**} durchgeführt wird, um daraus schmalbandige Fehlersignale zur Korrektur von Ausrichtungsfehlern zu gewinnen.

2. Verfahren nach Anspruch **1**, **dadurch gekennzeichnet, dass**
die Summen- und Differenzsignale vor der Multiplikation individuelle, elektronisch bezüglich ihrer Verstärkung steuerbare Verstärker (**Amp**) mit gleicher Steuercharakteristik durchlaufen, deren Verstärkung über eine gemeinsame, aus dem, Summensignal abgeleitete Regelgrösse (**AGC**) so eingestellt wird, dass das phasenrichtige Summensignal **x**_{**1**} **+ x**_{**2**} **+ y**_{**1**} **+ y**_{**2**} am Multiplikatoreingang unabhängig von der Stärke des optischen Eingangssignals einen konstanten Ausgangspegel hat.

3. Verfahren nach Anspruch **1** oder **2**, **dadurch gekennzeichnet, dass**
gegeneinander räumlich abgegrenzte Detektormittel gleichmässig mit unmoduliertem schmalbandigem Licht bestrahlt werden oder in mehreren Gruppen angeordnet sind, welche durch Teilstrahlen eines Lichtsignals beleuchtet werden.

4. Verfahren nach einem der Ansprüche **1** bis **3**, **dadurch gekennzeichnet, dass**
mittels unmodulierten Laserlichts durch Überlagerung mit den Teilstrahlen des Lichtsignals in beiden Gruppen von Detektormitteln jeweils zu denen der anderen Gruppe gegenphasige Photoströme erzeugt werden.

5. Vorrichtung zur Detektion eines Lichtsignals mit Detektormitteln (**X, Y**), einem Netzwerk (**I**) und zwei Differenzblöcken (**D**_{**1**}**, D**_{**2**}), **dadurch gekennzeichnet, dass** vier paarweise angeordnete Detektormittel (**X, Y**) ausgangsseitig an je einen Transimpedanzverstärker (**T**) angeschlossen sind, um die von den Detektormitteln erzeugten Detektorströme in hochfrequente Ausgangsspannungen **x**_{**1**}**, x**_{**2**}**, y**_{**1**}**, y**_{**2**} umzusetzen, die über ein Verteilnetzwerk (**I**) an drei Blöcke weitergeleitet werden, um ein Summensignal **x**_{**1**} **+ x**_{**2**} **+ y**_{**1**} **+ y**_{**2**} in einem Summenkanalblock (**S**) und ein Differenzsignal **x**_{**1**} **- x**_{**2**}, bzw. **y**_{**1**} **- y**_{**2**} in je einem Differenzkanalblock (**D1** bzw. **D2**) zu bilden, und dass Mittel vorhanden sind, um eine Multiplikation der Differenzsignale **x**_{**1**} **- x**_{**2**}, bzw. **y**_{**1**} **- y**_{**2**} mit dem Summensignal **x**_{**1**} **+ x**_{**2**} **+ y**_{**1**} **+ y**_{**2**} durchzuführen und um daraus schmalbandige Fehlersignale zur Korrektur von Ausrichtungsfehlern zu gewinnen.

6. Vorrichtung nach Anspruch **5**, **dadurch gekennzeichnet, dass**
im Summenkanalblock (**S**) und in den Differenzkanalblöcken bezüglich der Verstärkung steuerbare Verstärker (**Amp**) mit aufeinander angepassten Steuercharakteristiken vorhanden sind, wobei diese mit einem gemeinsamen Steuersignal (**AGC**) so geregelt werden, dass am Ausgang des Summenkanals (**S**) ein von der Stärke des optischen Eingangssignals unabhängiger konstanter Ausgangspegel entsteht.

7. Vorrichtung nach Anspruch **5** oder **6**, **dadurch gekennzeichnet, dass**
der Transimpedanzverstärker einen Verstärker hoher Leerlaufverstärkung mit einem zwischen Ausgang und Eingang geschalteten Gegenkopplungswiderstand (**R**) und einem parallel zu diesem geschalteten Integrationsglied (**Int**) umfasst.

8. Vorrichtung nach einem der Ansprüche **5** bis **7**, **dadurch gekennzeichnet, dass**
im Differenzkanalblock (**D1; D2**) eine Gilbert-Zelle als Multiplikator vorhanden ist, um eine Multiplikation der Differenzsignale mit dem phasenrichtigen Summensignal **x**_{**1**} **+ x**_{**2**} **+ y**_{**1**} **+ y**_{**2**} als Referenz durchzuführen.

9. Vorrichtung nach einem der Ansprüche **5** bis **8**, **dadurch gekennzeichnet,**
**dass** im Differenzkanalblock (**D1; D2**) und/oder im Summenkanalblock (**S**) eine Gilbert-Zelle als Multiplikator vorhanden ist, die zur Regelung des Verstärkungsfaktors dient.

10. Vorrichtung nach einem der Ansprüche **5** bis **9**, **dadurch gekennzeichnet, dass** der Summenkanalblock (**S**) eine ausgangsseitige Leitungsanpassungsstufe (**B**) aufweist, und dass in einem Differenzkanalblock (**D1; D2**) zwischen einer Gilbert-Zelle und einer einer zweiten Gilbert-Zelle vorgeschalteten Differenzstufe und/oder im Summenkanalblock zwischen einer Gilbert-Zelle und der Leitungsanpassungsstufe (**B**) eine Transimpedanz-Last und Pegelverschiebe-Vorrichtungen eingeschaltet sind.

11. Vorrichtung nach einem der Ansprüche **5** bis **10**, **dadurch gekennzeichnet, dass** die Vorrichtung Schaltungen umfasst, die auf einem einzigen Chip untergebracht sind, oder dass die Vorrichtung zur Signaldetektion und zur Erzeugung der Steuerspannung zur Verstärkungsregelung auf einem zweiten Chip untergebracht sind.

12. Vorrichtung zur Detektion eines Lichtsignals mit Detektormitteln (**X, Y**), einem Netzwerk (**I**) und zwei Differenzblöcken (**D**_{**1**}**, D**_{**2**}), **dadurch gekennzeichnet, dass** vier paarweise angeordnete Detektormittel (**X, Y**) ausgangsseitig an je einen Transimpedanzverstärker (**T**) angeschlossen sind, um die von den Detektormitteln erzeugten Detektorströme in hochfrequente Ausgangsspannungen **x**_{**1**}**, x**_{**2**}**, y**_{**1**}**, y**_{**2**} umzusetzen, die über ein Verteilnetzwerk (**I**) an drei Blöcke weitergeleitet werden, um ein Summensignal **x**_{**1**} **+ x**_{**2**} **+ y**_{**1**} **+ y**_{**2**} in einem Summenkanalblock (**S**) und ein Differenzsignal **x**_{**1**} **- x**_{**2**}, bzw. **y**_{**1**} **- y**_{**2**} in je einem Differenzkanalblock (**D1** bzw. **D2**) zu bilden, und dass Mittel vorhanden sind, um eine phasensensitive Gleichrichtung der Differenzsignale **x**_{**1**} **- x**_{**2**}, bzw. **y**_{**1**} **- y**_{**2**} mit dem Summensignal **x**_{**1**} **+ x**_{**2**} **+ y**_{**1**} **+ y**_{**2**} als Referenz durchzuführen und um daraus schmalbandige Fehlersignale zur Korrektur von Ausrichtungsfehlern zu gewinnen.

## Claims

1. Method for the detection of a light signal by means of a plurality of spatially separated detector means (X, Y), a network (I) and two difference blocks (D₁, D₂), **characterised in that** photocurrents generated in the detector means (X, Y) reach a transimpedance amplifier (T) in which they are converted into output voltages x₁, x₂, y₁, y₂ which are transmitted via a distribution network (I) to three blocks in order to form a sum signal x₁ + x₂ + y₁ + y₂ in a sum channel block (S) and difference signals x₁ - x₂, y₁ - y₂ in respective difference channel blocks (D1, D2), and **in that** a multiplication of the difference signals by the sum signal x₁ + x₂ + y₁ + y₂ is carried out in order to obtain narrowband error signals for correcting misalignment errors.

2. Method according to Claim 1, **characterised in that** before the multiplication the sum signal and the difference signals pass through individual amplifiers (Amp) with electronically controllable amplification having the same control characteristics, the amplification of which is so adjusted by means of a common regulating variable (AGC) derived from the sum signal that the phase-correct sum signal x₁ + x₂ + y₁ + y₂ has a constant output level at the multiplier input independently of the strength of the optical input signal.

3. Method according to Claim 1 or 2, **characterised in that** spatially separated detector means are evenly irradiated with unmodulated narrowband light or are arranged in a plurality of groups which are irradiated with partial beams of a light signal.

4. Method according to one of Claims 1 to 3, **characterised in that** photocurrents in antiphase to those of the other group are generated in each group of detector means by means of unmodulated laser light through superimposing with the partial beams of the light signal.

5. Apparatus for the detection of a light signal with detector means (X, Y), a network (I) and two difference blocks (D₁, D₂), **characterised in that** four detector means (X, Y) arranged in pairs are each connected on the output side to respective transimpedance amplifiers (T) in order to convert the detector currents generated by the detector means into high-frequency output voltages x₁, x₂, y₁, y₂ which are transmitted via a distribution network (I) to three blocks in order to form a sum signal x₁ + x₂ + y₁ + y₂ in a sum channel block (S) and difference signals x₁ - x₂, y₁ - y₂ in respective difference channel blocks (D1, D2), and **in that** means are provided to carry out a multiplication of the difference signals, x₁ - x₂, y₁ - y₂ by the sum signal x₁ + x₂ + y₁ + y₂ and to obtain narrowband error signals for correcting misalignment errors.

6. Apparatus according to Claim 5, **characterised in that** amplifiers (Amp) with controllable amplification and mutually adapted control characteristics are provided in the sum channel block (S) and in the difference channel blocks, said amplifiers (Amp) being so regulated by a common control signal (AGC) that a constant output level independent of the strength of the optical input signal is produced at the output of the sum channel (S).

7. Apparatus according to Claim 5 or 6, **characterised in that** the transimpedance amplifier includes an amplifier with high open-loop amplification and with a negative feedback resistor (R) connected between output and input and an integrator (Int) connected in parallel to said negative feedback resistor (R).

8. Apparatus according to one of Claims 5 to 7, **characterised in that** a Gilbert cell is provided as the multiplier in the difference channel block (D1; D2) in order to carry out a multiplication of the difference signals by the phase-correct sum signal x₁ + x₂ + y₁ + y₂ as a reference.

9. Apparatus according to one of Claims 5 to 8, **characterised in that** a Gilbert cell used for regulating the gain factor is provided as the multiplier in the difference channel block (D1; D2) and/or in the sum channel block (S).

10. Apparatus according to one of Claims 5 to 9, **characterised in that** the sum channel block (S) has a line matching stage (B) on its output side, and **in that** a transimpedance load and level shift devices are connected between one Gilbert cell and a difference stage connected before a second Gilbert cell in a difference channel block (D1; D2), and/or are connected between a Gilbert cell and the line matching stage (B) in the sum channel block.

11. Apparatus according to one of Claims 5 to 10, **characterised in that** the apparatus includes circuits incorporated in a single chip, or **in that** the devices for signal detection and for generating the control voltage for gain regulation are incorporated in a second chip.

12. Apparatus for the detection of a light signal with detector means (X, Y), a network (I) and two difference blocks (D₁, D₂), **characterised in that** four detector means (X, Y) arranged in pairs are each connected on the output side to respective transimpedance amplifiers (T) in order to convert the detector currents generated by the detector means into high-frequency output voltages x₁, x₂, y₁, y₂ which are transmitted via a distribution network (I) to three blocks in order to form a sum signal x₁ + x₂ + y₁ + y₂ in a sum channel block (S) and difference signals x₁ - x₂, y₁ - y₂ in respective difference channel blocks (D1, D2), and **in that** means are provided to carry out a phase-sensitive rectification of the difference signals x₁ - x₂, y₁ - y₂ by the sum signal x₁ + x₂ + y₁ + y₂ as a reference, and in order to obtain narrowband error signals for correcting misalignment errors.

## Revendications

1. Procédé de détection d'un signal lumineux à l'aide de plusieurs dispositifs de détection démarqués spatialement les uns des autres (**X, Y**), d'un réseau (**I**) et de deux blocs différentiels (**D1, D2**), **caractérisé en ce que**
les photocourants générés dans les dispositifs de détection (**X, Y**) parviennent dans un amplificateur à impédance transversale (**T**), dans lequel ils sont convertis en tensions de sortie **x**_{**1**}**, x**_{**2**}**, y**_{**1**}**, y**_{**2**}**,** qui sont ensuite acheminées vers trois blocs par le biais d'un réseau de répartition (**I**), afin de former un signal composite **x**_{**1**} **+ x**_{**2**} **+ y**_{**1**} **+ y**_{**2**} dans un bloc de voie somme (**S**) et un signal différentiel **x**_{**1**} **- x**_{**2**} ou **y**_{**1**} **- y**_{**2**} dans chacun des blocs de voie différence respectifs (**D1** ou **D2**), et **en ce qu'**une multiplication des signaux différentiels avec le signal somme **x**_{**1**} **+ x**_{**2**} **+ y**_{**1**} **+ y**_{**2**} est réalisée pour obtenir des signaux d'erreur à bande étroite permettant la correction des erreurs d'alignement.

2. Procédé selon la revendication **1**, **caractérisé en ce que**
les signaux de somme et de différence traversent, avant la multiplication, des amplificateurs (Amp) individuels commandables par électronique pour ce qui est de leur amplification et présentant des caractéristiques de commande identiques, dont l'amplification est régulée par une grandeur de régulation (AGC) commune dérivée du signal somme de façon telle que le signal composite de phase correcte **x**_{**1**} **+ x**_{**2**} **+ y**_{**1**} **+ y**_{**2**} présente à l'entrée du multiplicateur un niveau de sortie constant, indépendamment de la puissance du signal optique d'entrée.

3. Dispositif selon la revendication **1** ou **2**, **caractérisé en ce**
**que** des moyens de détection démarqués spatialement les uns des autres sont irradiés de façon uniforme avec une lumière à bande étroite non modulée ou sont disposés dans plusieurs groupes qui sont illuminés par des faisceaux partiels d'un signal lumineux.

4. Procédé selon l'une des revendications **1** à **3**, **caractérisé en ce que** l'on génère, au moyen d'une lumière laser non modulée et par superposition avec les faisceaux partiels du signal lumineux, dans deux groupes de moyens de détection, des photocourants de phase respectivement opposée à celle de l'autre groupe.

5. Dispositif de détection d'un signal lumineux comportant des moyens de détection (**X, Y**), un réseau (**I**) et deux blocs différentiels (**D1, D2**), **caractérisé en ce que** quatre moyens de détection disposés par paire (**X, Y**) sont raccordés en sortie respectivement à un amplificateur à impédance transversale (**T**) pour convertir les courants de détection générés par les détecteurs en tensions de sortie haute fréquence **x**_{**1**}**, x**_{**2**}**, y**_{**1**}**, y**_{**2**}, lesquelles sont réacheminées dans trois blocs par le biais d'un réseau de répartition (**I**), afin de former un signal somme **x**_{**1**} **+ x**_{**2**} **+ y**_{**1**} **+ y**_{**2**} dans un bloc de voie somme (**S**) et un signal différentiel **x**_{**1**} **- x**_{**2**} ou **y**_{**1**} **- y**_{**2**} dans chacun des blocs de voie différence respectifs (**D1** ou **D2**), et **en ce qu'**il existe des moyens pour réaliser une multiplication des signaux différentiels **x**_{**1**} **- x**_{**2**} ou **y**_{**1**} **- y**_{**2**} avec le signal somme **x**_{**1**} **+ x**_{**2**} **+ y**_{**1**} **+ y**_{**2**} et obtenir alors des signaux d'erreur à bande étroite permettant de corriger des erreurs d'alignement.

6. Dispositif selon la revendication **5**, **caractérisé en ce que** dans le bloc de la voie somme (**S**) et dans les blocs de voie différence sont présents des amplificateurs (**Amp**) commandables pour ce qui est de l'amplification, et présentant des caractéristiques de commande adaptées les unes aux autres, celles-ci étant régulées par un signal de commande commun (**AGC**) de façon telle qu'en sortie de la voie somme (**S**) existe un niveau de sortie constant, indépendant de la puissance du signal optique d'entrée.

7. Dispositif selon la revendication **5** ou **6**, **caractérisé en ce que** l'amplificateur à impédance transversale comporte un amplificateur d'amplification en circuit ouvert élevée avec une résistance à contre-réaction (**R**) intercalée entre une sortie et une entrée, et un organe d'intégration (**Int**) intercalé en parallèle.

8. Dispositif selon l'une des revendications **5** à **7**, **caractérisé en ce que** dans le bloc de voie différence (**D1 ; D2**) est présente une cellule de Gilbert en tant que multiplicateur, afin de réaliser une multiplication des signaux différentiels avec le signal composite de phase correcte **x**_{**1**} **+ x**_{**2**} **+ y**_{**1**} **+ y**_{**2**} en tant que référence.

9. Dispositif selon l'une des revendications **5** à **8**, **caractérisé en ce que**
dans le bloc de voie différence (**D1 ; D2**) et/ou dans le bloc de voie somme (**S**) est présente en tant que multiplicateur une cellule de Gilbert qui sert à réguler le coefficient d'amplification.

10. Dispositif selon l'une des revendications **5** à **9**, **caractérisé en ce que**
le bloc de voie somme (**S**) présente un étage d'adaptation de la ligne côté sortie (**B**), et **en ce que** sont intercalés dans un bloc de voie différence (**D1 ; D2**) entre une cellule de Gilbert et un étage différentiel intercalé avant une seconde cellule de Gilbert et/ou dans le bloc de voie somme entre une cellule de Gilbert et l'étage d'adaptation de ligne (**B**) une charge d'impédance transversale et des dispositifs de décalage de niveau.

11. Dispositif selon l'une des revendications **5** à **10**, **caractérisé en ce que** le dispositif comprend des circuits qui sont appliqués sur une puce unique ou **en ce que** le dispositif de détection du signal et de génération de la tension de commande permettant la commande de gain est appliqué sur une seconde puce.

12. Dispositif de détection d'un signal lumineux comportant des moyens de détection (**X, Y**), un réseau (**I**) et deux blocs différentiels (**D1, D2**), **caractérisé en ce que** quatre moyens de détection disposés par paire (**X, Y**) sont raccordés en sortie respectivement à un amplificateur à impédance transversale (**T**) pour convertir les courants de détection générés par les détecteurs en tensions de sortie haute fréquence **x**_{**1**}**, x**_{**2**}**, y**_{**1**}**, y**_{**2**}, lesquelles sont réacheminées dans trois blocs par le biais d'un réseau de répartition (**I**), afin de former un signal composite **x**_{**1**} **+ x**_{**2**} **+ y**_{**1**} **+ y**_{**2**} dans un bloc de voie somme (**S**) et un signal différentiel **x**_{**1**} **- x**_{**2**} **ou y**_{**1**} **- y**_{**2**} dans un bloc de voie différence respectif (**D1** ou **D2**), et **en ce qu'**il existe des moyens pour réaliser un redressement sensible à la phase des signaux différentiels **x**_{**1**} **- x**_{**2**} ou **y**_{**1**} **- y**_{**2**} avec le signal composite **x**_{**1**} **+ x**_{**2**} **+ y**_{**1**} **+ y**_{**2**} en tant que référence et afin d'acquérir alors des signaux d'erreur à bande étroite permettant la correction des erreurs d'alignement.
